# EUROPÄISCHE PATENTSCHRIFT

(11) **EP 2 154 352 B1**
(45) Veröffentlichungstag und Bekanntmachung des Hinweises auf die Patenterteilung: **11.02.2015**
(21) Anmeldenummer: 09009421.0
(22) Anmeldetag: 21.07.2009
(51) Int. Cl.: F02D 13/02, F02M 25/07, F01N 13/10, F02D 41/00, F02B 37/02

(54) **Verfahren und Vorrichtung zum Betreiben einer mehrzylindrischen Brennkraftmaschine**
Method and device for operating a multi-cylindrical combustion engine
Procédé et dispositif destinés au fonctionnement d'un moteur à combustion interne multi-cylindrique

(30) Priorität: 12.08.2008 DE 102008038735
(43) Veröffentlichungstag der Anmeldung: 17.02.2010
(73) Patentinhaber: MAN Truck & Bus AG, 80995 München (DE)
(72) Erfinder: Weiss, Joachim, Dr., 90522 Oberasbach (DE)

(56) Entgegenhaltungen:
- WO-A1-2005/061870
- DE-A1-102005 002 246
- JP-A- H10 176 558
- US-A1- 2003 164 163
- US-A1- 2008 060 625

## Beschreibung

Die vorliegende Erfindung betrifft ein Verfahren zum Betreiben einer mehrzylindrischen Brennkraftmaschine nach dem Oberbegriff des Anspruches 1 sowie eine Vorrichtung zum Betreiben einer mehrzylindrigen Brennkraftmaschine nach dem Oberbegriff des Anspruches 7.

Die äußere, gekühlte Abgasrückführung ist ein weit verbreitetes Mittel zur Senkung der Stickoxidemissionen in den Abgasen von Brennkraftmaschinen. Mit zunehmenden Motorleistungen stellt die Wärmeabfuhr aus dem Abgaskühler immer höhere Anforderungen an das Kühlsystem der Brennkraftmaschine. Zur Reduzierung des Wärmeeintrags aus der äußeren Abgasrückführung in das Kühlsystem ist es z. B. aus der DE 10 2005 002 246 A1 bekannt, die äußere Abgasrückführung mit einer inneren Abgasrückführung zu kombinieren. Dazu werden die Ventilsteuerzeiten der Einlassventile und/oder der Auslassventile im unteren Lastbereich der Brennkraftmaschine so verstellt, dass deren Überschneidungsbereich vergrößert ist, wodurch Abgase in den Zylindern bzw. Brennräumen verbleiben und sich mit der angesaugten Frischluft vermischen. Mit zunehmender Last der Brennkraftmaschine wird zusätzlich ein Abgasrückführventil der äußeren Abgasrückführung geöffnet.

US2003/164163A1 beschreibt ein Verfahren und eine Vorrichtung zur flexiblen Regulierung der internen Ventilsteuerzeiten. Hierzu wird ein konstantes Motorventilsteuerprofil mit einem variablen Profil kombiniert. Es werden Ventile variabel und unabhängig zu konstant sich bewegenden Ventilen angesteuert. Durch gezieltes offenhalten von Ventilen kann eine vorteilhafte Druckdifferenz erreicht werden. Dies kann verwendet werden, um hohe interne Abgasrückführraten zu erreichen.

Aufgabe der Erfindung ist es, ein Verfahren und eine Vorrichtung zum Betreiben einer mehrzylindrischen Brennkraftmaschine vorzuschlagen, mit dem bzw. der eine wirksame innere Abgasrückführung erzielbar ist, die ggf. mit einer äußeren Abgasrückführung kombinierbar ist und mit der ggf. auch ohne eine variable Ventilsteuerung gute Motorwirkungsgrade verwirklichbar sind.

Diese Aufgabe wird bezüglich des Verfahrens gelöst mit den Merkmalen des Patentanspruches 1. Bezüglich der Vorrichtung wird diese Aufgabe gelöst mit den Merkmalen des Patentanspruches 6. Vorteilhafte Weiterbildungen der Erfindung beinhalten die Unteransprüche.

Erfindungsgemäß wird vorgeschlagen, dass die Ventilsteuerzeiten derart eingestellt werden, dass Abgas-Druckstöße aus in der Zündfolge jeweils nachfolgenden Zylindern eine innere Abgasrückführung in den jeweils vorherigen Zylinder bewirken. Dementsprechend werden die im Abgassammelrohr auftretenden Druckschwankungen gezielt dazu genutzt, das von einem Zylinder emittierte Abgas in einen anderen Zylinder zurückzudrücken, dessen Auslassventil durch entsprechende Modifizierung der Ventilsteuerzeiten noch ausreichend geöffnet ist.

Insbesondere können die Ventilsteuerzeiten der Auslassventile auf ca. 30 Grad KW vor UT (Öffnungsbeginn) und ca. 30 Grad KW nach OT (Auslassschluss) eingestellt werden. Dieses nach "spät" Verlegen der Steuerzeiten der Auslassventile stellt sicher, dass die von dem in der Zündfolge nachfolgenden Zylinder ausgelöste Abgas-Druckwelle auf das durch die Spätvertegung noch geöffnete Auslassventil des vorher gezündeten Zylinders trifft und somit wirkungsvoll Abgas in diesen Zylinder zurückdrückt.

Des weiteren kann zumindest der Öffnungszeitpunkt der Einlassventile auf ca. 30 Grad KW vor OT vorverstellt werden. Damit kann durch das "frühere" Öffnen der Einlassventile zusätzlich in den jeweiligen Zylinder rückgeführtes Abgas über das geöffnete Einlassventil in den Ansaugbereich der Brennkraftmaschine vorgelagert werden, also den Rückführungsgrad an Abgas weiter erhöhen.

Erfindungsgemäß ist das Sammelrohr der Abgasanlage zweiflutig bzw. zweiteilig ausgeführt, wobei die Abgase der Zylinder zeitlich alternierend den zwei Fluten zugeführt werden und wobei ein die beiden Fluten zusammenschaltendes Umschaltventil vorgesehen ist, das bei erwünschter innerer Abgasrückführung geöffnet wird. Damit gelingt es, die innere Abgasrückführung mit einfachen Mitteln derart zu steuern, dass z.B. bei niedrigerer Lastanforderung der Brennkraftmaschine durch Schließen des Umschaltventiles die innere Abgasrückführung weitgehendst vermindert bzw. unterbrochen ist, weil die besagten Abgas-Druckstöße sich nicht auf den jeweils in der Zündfolge vorherigen Zylinder fortpflanzen können. Durch entsprechende Abstimmung der Abgasanlage kann dabei in an sich bekannter Weise der Ladungswechsel der Zylinder durch Ausnutzung der gasdynamischen Strömungen verbessert werden.

Des weiteren können die beiden Fluten der Sammelrohre mit einer zweiflutigen Abgasturbine eines Abgasturboladers verbunden sein, wobei durch Schließen des Umschaltventiles im unteren Lastbereich der Abgasturbolader im Stoßbetrieb und durch Öffnen des Umschaltventiles im höheren Lastbereich im Staubetrieb betrieben wird und wobei zumindest im unteren Lastbereich zusätzlich eine äußere Abgasrückführung durchgeführt wird. Dies stellt neben einem guten Motorwirkungsgrad aufgrund der Turboladersteuerung eine insgesamt adäquate Abgasrückführung ohne übermäßige Temperaturbelastung des Kühlsystems der Brennkraftmaschine sicher, wobei im niedrigeren Lastbereich weitgehend nur eine äußere Abgasrückführung und im höheren Lastbereich bei geöffnetem Umschaltventil eine innere und falls erforderlich im verminderten Umfang eine zusätzliche, äußere Abgasrückführung durchgeführt wird.

Dabei kann bevorzugt in einer Vorrangschaltung das Umschaltventil unabhängig von der Belastung der Brennkraftmaschine zusätzlich dann geöffnet werden, wenn die für die äußere Abgasrückführung erforderliche Kühlleistung für die Rückkühlung des Abgases ein definiertes Maximum erreicht oder überschreitet. Die Umschaltpunkte können somit abhängig z.B. auch von äußeren Umständen wie hohen Außentemperaturen, etc. variabel sein.

Eine vorteilhafte Vorrichtung zur Durchführung des vorstehenden Verfahrens an einer mehrzylindrischen Brennkraftmaschine mit Einlass- und Auslassventilen je Zylinder und mit einem Sammelrohr für Abgase besteht darin, dass die Ventilsteuerzeiten der Auslassventile so spät und ggf. der Einlassventile so früh eingestellt sind, dass Abgas-Druckstöße aus in der Zündfolge jeweils nachfolgenden Zylindern eine innere Abgasrückführung in den jeweils vorherigen Zylinder bewirken.

Erfindungsgemäß ist das Abgassammelrohr zweiflutig bzw. zweiteilig mit in der Zündfolge der Brennkraftmaschine alternierend beaufschlagten Fluten ausgeführt, wobei ein Umschaltventil vorgesehen ist, das bei erwünschter innerer Abgasrückführung geöffnet ist. Dies ermöglicht eine effiziente Steuerung der Abgasrückführung bei geringem baulichen Aufwand.

In vorteilhafter Anwendung der Erfindung an einer turboaufgeladenen Brennkraftmaschine können die zwei Fluten des Sammelrohres über getrennte Abgasleitungen an eine zweiflutige Turbine eines Abgasturboladers angeschlossen sein, wobei stromauf der Turbine an das Sammelrohr eine äußere Abgasrückführung mit einem Abgaskühler und einer Rückführungsleitung angeschlossen ist und wobei ferner das Umschaltventil in einem niedrigeren Lastbereich der Brennkraftmaschine zur Steuerung einer Stoßaufladung geschlossen und im höheren Lastbereich zur Steuerung einer Stauaufladung der Brennkraftmaschine geöffnet ist.

Dabei können bevorzugt das Umschaltventil und das Abgasrückführungsventil über ein elektronisches Steuergerät gesteuert sein, wobei das Steuergerät u.a. die Last der Brennkraftmaschine und die aus motorspezifischen Parametern errechnete Gesamt-Abgasrückführrate als Steuerkriterien verwendet und mit einsetzender innerer Abgasrückführung die äußere Abgasrückführung vermindert wird, wodurch auch der Wärmeeintrag in das Kühlsystem verringert ist.

Schließlich kann die Brennkraftmaschine in an sich bekannter Weise mit einer variablen Ventilsteuerung zumindest der Auslassventile ausgerüstet sein, wobei über die Ventilsteuerung die Ventilsteuerzeiten bei geöffnetem Umschaltventil von einer einen optimalen Ladungswechsel ergebenden Steuerzeit auf eine innere Abgasrückführung bewirkende Steuerzeit umstellbar sind.

Ein Ausführungsbeispiel der Erfindung ist im folgenden mit weiteren Einzelheiten näher erläutert. Die schematische Zeichnung zeigt in:
- Fig. 1: ein Blockschaltbild einer 6-Zylinder Hubkolben-Reihen-Brennkraftmaschine mit Abgasturboaufladung und einer äußeren und einer inneren Abgasrückführung; und
- Fig. 2: ein Ladungswechseldiagramm der in der Zündfolge der Brennkraftmaschine nach Fig. 1 hintereinander folgenden Zylinder 1, 5 und 3 mit Darstellung der Druckverläufe und Ventilsteuerzeiten.

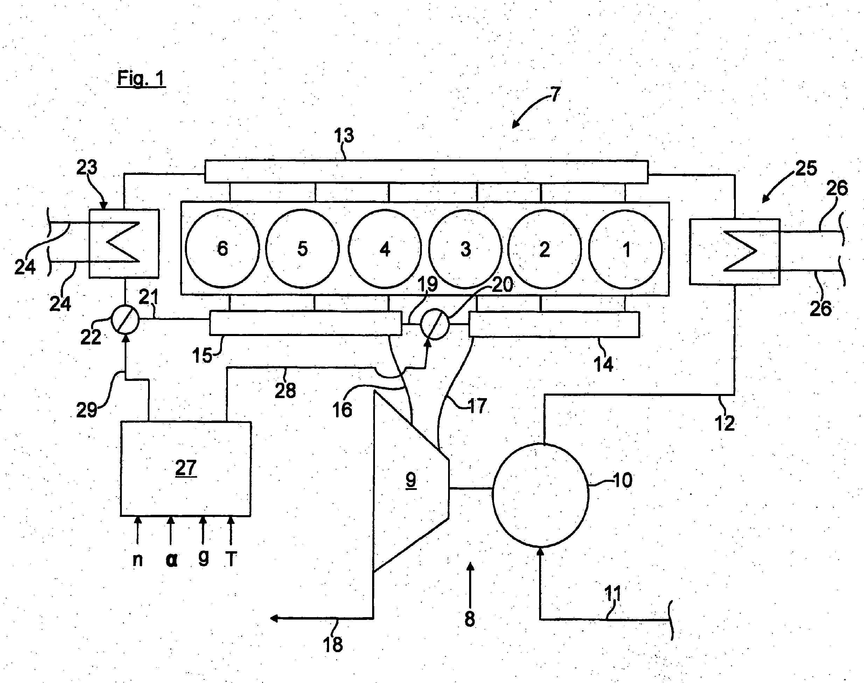

In der Fig. 1 ist mit 7 eine Hubkolben-Brennkraftmaschine bezeichnet, die sechs in Reihe angeordnete Zylinder 1 bis 6 aufweist.

Die Brennkraftmaschine 7 arbeitet im Viertakt-Verfahren und weist in an sich bekannter Weise je Brennraum zur Steuerung des Ladungswechsels zumindest ein Einlassventil und ein Auslassventil (nicht dargestellt) auf, deren Öffnungs- und Schließzeitpunkte mittels einer ebenfalls nicht dargestellten, variablen Ventilsteuerung veränderbar gesteuert sind. Die Öffnungs- und Schließzeitpunkte sind in üblicher Weise über den Kurbelwinkel KW der Kurbelwelle bzw. zu den oberen Totpunkten OT und den unteren Totpunkten UT der Kolben definiert.

Die Aufladung der Brennkraftmaschine 7 erfolgt mittels eines Abgasturboladers 8, der über eine zweiflutige Abgasturbine 9 ein Verdichterlaufrad 10 antreibt.

Der Verdichter 10 saugt über eine Zuführleitung 11 gereinigte Verbrennungsluft an und drückt sie über eine Ladeluftleitung 12 zu einem Ansaugverteiler 13, der über separate Leitungen mit den Brennräumen der Brennkraftmaschine verbunden ist. In die Ladeluftleitung 12 ist ferner ein Ladeluftkühler 25 eingeschaltet, der über Leitungen 26 mit dem Flüssigkeits-Kühlsystem der Brennkraftmaschine 7 verbunden ist.

Die aus den Brennräumen austretenden Abgase werden zwei Sammelrohren 14, 15 zugeführt, die jeweils abströmseitig über Leitungen 16, 17 mit den zwei strömungsdynamisch voneinander getrennten Fluten der Abgasturbine 9 verbunden sind. Nach der Abgasturbine 9 wird das Abgas über zumindest eine Abgasleitung 18 der weiteren Abgasanlage ggf. mit abgasreinigenden Einrichtungen, nicht dargestellt zugeführt.

Zwischen den beiden Sammelrohren 15, 16 ist eine Verbindungsleitung 19 mit einem Umschaltventil 20 vorgesehen. Mittels des Umschaltventiles 20 können die beiden Sammelrohre 15, 16 strömungsdynamisch miteinander verbunden werden, so dass sie wie ein gemeinsames Sammelrohr für alle sechs Zylinder 1 bis 6 funktionieren.

In der Zündfolge 1-5-3-6-2-4 der Brennkraftmaschine 7 betrachtet sind die Zylinder 1 bis 6 bzw. deren Brennräume alternierend an die Sammelrohre 15, 16 angeschlossen, so dass auf den Auslassstoß eines der Zylinder in das eine Sammelrohr jeweils zeitlich ein Auslassstoß eines anderen Zylinders in das andere Sammelrohr erfolgt.

An das Sammelrohr 15 ist beispielhaft eine einzige Abgasrückführleitung 21 angeschlossen, die andererseits mit dem Ansaugverteiler 13 verbunden ist und in die ein Abgasrückführventil 22 und ein Abgaskühler 23 integriert sind. Der Abgaskühler 23 ist über Leitungen 24 an das nicht dargestellte Kühlsystem der Brennkraftmaschine 7 angeschlossen. Über das Abgasrückführventil 22 kann die Rückführrate der äußeren Abgasrückführung der Brennkraftmaschine 7 gesteuert werden.

Das Umschaltventil 20 in der Verbindungsleitung 19 und das Abgasrückführventil 22 in der Abgasrückführungsleitung 21 sind über elektrische Leitungen 28, 29 an ein elektronisches Steuergerät 27 (z.B. dem Motorsteuergerät) angeschlossen und werden wie nachstehend beschrieben über dieses gesteuert bzw. geöffnet oder geschlossen.

Das Steuergerät 27 ist dabei über Sensoren und dergleichen an relevante Steuerparameter der Brennkraftmaschine 7 angeschlossen, wie z.B. der Drehzahl n, dem Kurbelwinkel α, dem Lastzustand g, der Temperatur T, etc., und steuert darüber hinaus auch die variable Ventilsteuerung bzw. die Öffnungs- und Schließzeitpunkte der Einlass- und Auslassventile zur Realisierung einer inneren Abgasrückführung.

Die innere Abgasrückführung der Brennkraftmaschine 7 wird gesteuert, indem zum einen das Umschaltventil 20 geöffnet und damit die Sammelrohre 14, 15 funktionell zusammengeschaltet werden. Dies bewirkt zunächst, dass sich von den Auslassstößen z.B. der Zylinder 1 bis 3 ausgehende Druckwellen von der Sammelleitung 14 in die Sammelleitung 15 fortpflanzen können und umgekehrt.

Zeitgleich wird die variable Ventilsteuerung der Brennkraftmaschine 7 angesteuert und es werden die Ventilsteuerzeiten derart eingestellt, dass Auslass-Druckstöße aus in der Zündfolge jeweils nachfolgenden Zylindern eine innere Abgasrückführung in den jeweils vorherigen Zylinder bewirken.

Dazu werden die Ventilsteuerzeiten der Auslassventile auf ca. 30 Grad KW vor UT (Öffnungsbeginn) und ca. 30 Grad KW nach OT (Auslassschluss) eingestellt. Dieses nach "spät" Verschieben der Ventilsteuerzeit der Auslassventile bewirkt, dass die durch den Auslassstoß eines nachfolgend gezündeten Zylinders initiierte Druckwelle exakt auf das durch die Spätverstellung noch geöffnete Auslassventil des vorhergehenden Zylinders trifft und somit eine wirksame innere Abgasrückführung ermöglicht. Das Abgas wird dabei quasi in den betreffenden Zylinder zurückgeschoben.

Des weiteren wird über die variable Ventilsteuerung der Öffnungszeitpunkt der Einlassventile auf ca. 30 Grad KW vor OT vorverstellt. Durch das frühere Öffnen der Einlassventile kann das zurückströmende Abgas bis in den Ansaugkanäle der Brennkraftmaschine vorgelagert werden und wird dann wiederum beim Ansaugtakt in die Brennräume eingeführt.

Beide Maßnahmen bewirken somit eine wirksame innere Abgasrückführung.

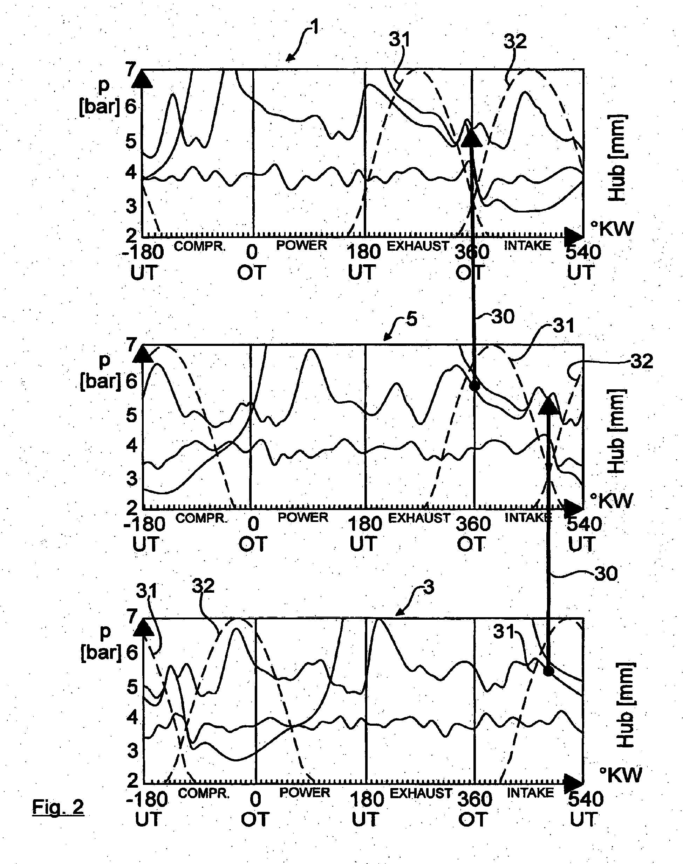

Dies veranschaulicht auch die Fig. 2, die Ladungswechseldiagramme der in der Zündfolge hintereinander liegenden Zylinder 1, 5 und 3 zeigt, wobei die Zylinderdruckverläufe über dem jeweiligen Kurbelwinkel KW von jeweils OT zu UT und wieder zu OT dargestellt sind. Die Ventilerhebungskurven in gestrichelten Linien der Auslassventile und der Einlassventile sind mit 31 und 32 bezeichnet.

Wie ersichtlich ist, trifft der Auslassstoß bzw. die entsprechende Druckwelle des Zylinders 5 durch die Spätverschiebung des Öffnungs- und Schließzeitpunktes der Auslassventile (Linie 31) auf die noch im Überschneidungsbereich befindliche Ventilstellung des vorangegangenen Zylinders 1, wobei aufgrund des ersichtlichen Druckunterschiedes das Abgas gemäß Pfeil 30 in den Zylinder 1 zurückströmt. Gleiches gilt für den in der Zündfolge dahinter liegenden Zylinder 3, über dessen Auslassstoß das Abgas in den Zylinder 5 zurückströmt, usw.

Durch die Vorverlegung des Öffnungszeitpunktes der Einlassventile (Linie 32) kann dieser Vorgang noch unterstützt und sogar eine Vorverlagerung von Abgas in die Einlasskanäle der Brennkraftmaschine bewirkt werden.

Im niedrigeren Lastbereich der Brennkraftmaschine 7 ist das Umschaltventil 20 geschlossen und die Ventilsteuerung der Einlass- und Auslassventile auf reguläre Werte zur Erzielung eines optimalen Ladungswechsel eingestellt, bei dem keine oder nur eine geringe innere Abgasrückführung erfolgt. Die Abgasturbine 9 des Abgasturboladers 8 wird dabei zweiflutig im Stoßbetrieb beaufschlagt, wobei die Auslassstöße der Zylinder 1 bis 3 über das eine Sammelrohr 14 und die Leitung 17 auf die eine Flut der Abgasturbine 9 und die Auslassstöße der Zylinder 4 bis 6 über das Sammelrohr 15 und die Leitung 16 auf die andere Flut der Abgasturbine 9 treffen.

Durch Aufsteuern des Abgasrückführventils 22 erfolgt dabei eine äußere Abgasrückführung in dem gewünschtem Maße, die über das elektronische Steuergerät 27 nach Maßgabe sämtlicher steuerungstechnischer Parameter berechnet wird.

In einem höheren Lastbereich der Brennkraftmaschine 7 bis hin zur Volllast wird das Umschaltventil 20 geöffnet, so dass die beiden Sammelrohre 14, 15 nunmehr funktionell zusammengeschaltet sind. Damit können sich Druckwellen beider Sammelleitungen ausgleichen und die Abgasturbine 9 wird nunmehr im Staubetrieb beaufschlagt.

Gleichzeitig oder nach gewünschter Abgasrückführrate werden über die variable Ventilsteuerung die Ventilsteuerzeiten der Auslassventile und der Einlassventile wie vorbeschrieben verstellt und somit eine innere Abgasrückführung eingeleitet. Die Verstellung kann ggf. gleitend erfolgen. Ferner kann dabei die Temperatur des Kühlsystems der Brennkraftmaschine und/oder die Temperatur eines Bauteiles der Brennkraftmaschine derart Berücksichtigung finden, dass mit zunehmender Temperatur die äußere Abgasrückführung zumindest zurückgefahren wird.

In einer vereinfachten, nicht erfindungsgemäßen Ausführung kann auch auf eine variable Ventilsteuerung verzichtet werden. Die innere Abgasrückführung wird dann ausschließlich durch Öffnen und Schließen des Umschaltventiles 20 in der beschriebenen Form aktiviert.

Die Brennkraftmaschine 7 kann ggf. zweiflutig aufgeladen sein oder auch nur eine einflutige Abgasturbine aufweisen oder ggf. auch ohne Abgasturboaufladung betrieben sein. Ferner kann sie auch weniger oder mehr als sechs Zylinder aufweisen.

## Patentansprüche

1. Verfahren zum Betreiben einer mehrzylindrischen Brennkraftmaschine, bei der der Ladungswechsel über Einlassventile und Auslassventile gesteuert wird und die Abgase aus den Verbrennungsräumen über zumindest eine Abgasleitung abgeführt werden, sowie mit einer durch die eingestellten Ventilsteuerzeiten bewirkten, inneren Abgasrückführung, wobei die Ventilsteuerzeiten derart eingestellt werden, dass Abgas-Druckstöße aus in der Zündfolge jeweils nachfolgenden Zylindern eine innere Abgasrückführung in den jeweils vorherigen Zylinder bewirken, **dadurch gekennzeichnet, dass** ein Sammelrohr (14, 15) der Abgasanlage zweiflutig bzw. zweiteilig ausgeführt wird, wobei die Abgase der Zylinder zeitlich alternierend den zwei Fluten zugeführt werden und dass ein die beiden Fluten zusammenschaltendes Umschaltventil (20) vorgesehen ist, das bei definierter, zu einem vorgegebenen Zeitpunkt erwünschter innerer Abgasrückführung geöffnet wird.

2. Verfahren nach Anspruch 1, **dadurch gekennzeichnet, dass** die Ventilsteuerzeiten der Auslassventile auf in etwa 30 Grad KW vor UT (Öffnungsbeginn) und in etwa 30 Grad KW nach OT (Auslassschluss) eingestellt werden.

3. Verfahren nach-Anspruch 1 und 2, **dadurch gekennzeichnet, dass** zumindest der Öffnungszeitpunkt der Einlassventile auf in etwa 30 Grad KW vor OT vorverstellt wird.

4. Verfahren nach einem der vorhergehenden Ansprüche, **dadurch gekennzeichnet, dass** die beiden Fluten der Sammelrohre (14, 15) mit einer zweiflutigen Abgasturbine (9) eines Abgasturboladers (8) verbunden sind und dass durch Schließen des Umschaltventiles (20) im unteren Lastbereich der Abgasturbolader (8) im Stoßbetrieb und durch Öffnen des Umschaltventiles (20) im höheren Lastbereich im Staubetrieb betrieben wird und dass zumindest im unteren Lastbereich zusätzlich eine äußere Abgasrückführung durchgeführt wird.

5. Verfahren nach Anspruch 4, **dadurch gekennzeichnet, dass** das Umschaltventil (20) unabhängig von der Belastung der Brennkraftmaschine (7) dann geöffnet wird, wenn die für die äußere Abgasrückführung erforderliche Kühlleistung für die Rückkühlung der Abgase ein definiertes Maximum erreicht oder überschreitet.

6. Vorrichtung zur Durchführung des Verfahrens nach einem oder mehreren der vorhergehenden Ansprüche, mit einer mehrzylindrischen Brennkraftmaschine (7) mit Einlass- und Auslassventilen je Zylinder und zumindest einer Abgasleitung für Abgase, wobei die Ventilsteuerzeiten der Auslassventile so spät und ggf. des Einlassventils so früh eingestellt sind, dass Abgas-Druckstöße aus in der Zündfolge jeweils nachfolgenden Zylindern eine innere Abgasrückführung in den jeweils vorherigen Zylinders bewirken, **dadurch gekennzeichnet, dass** das Abgassammelrohr (14, 15) zweiflutig oder zweiteilig mit in der Zündfolge der Brennkraftmaschine (7) alternierend beaufschlagten Fluten ausgeführt ist und dass ein Umschaltventil (20) vorgesehen ist, das bei erwünschter innerer Abgasrückführung geöffnet ist.

7. Vorrichtung nach Anspruch 6, **dadurch gekennzeichnet, dass** die zwei Fluten des Sammelrohres (14, 15) über getrennte Abgasleitungen (16, 17) an eine zweiflutige Turbine (9) eines Abgasturboladers (8) angeschlossen sind, dass stromauf der Turbine (9) an das Sammelrohr (14, 15) eine äußere Abgasrückführung mit seinem Abgaskühler (23), einem Abgasrückführventil (22) und einer Rückführleitung (21) angeschlossen sind, und dass das Umschaltventil (20) in einem niedrigeren Lastbereich der Brennkraftmaschine (7) zur Steuerung einer Stoßaufladung geschlossen und im höheren Lastbereich zur Steuerung einer Stauaufladung geöffnet ist.

8. Vorrichtung nach Anspruch 7, **dadurch gekennzeichnet, dass** das Umschaltventil (20) und das Abgasrückführventil (22) über ein elektronisches Steuergerät (27) gesteuert sind, wobei das Steuergerät (27) wenigstens die Last der Brennkraftmaschine (7) und die aus motorspezifischen Parametern errechnete Gesamt-Abgasrückführrate als Steuerkriterien verwendet.

9. Vorrichtung nach einem der Ansprüche 6 bis 8, **dadurch gekennzeichnet, dass** die Brennkraftmaschine (7) mit einer variablen Ventilsteuerung zumindest der Auslassventile ausgerüstet ist, und dass über die Ventilsteuerung die Ventilsteuerzeiten bei geöffnetem Umschaltventil (20) von einer einen optimalen Ladungswechsel ergebenden Steuerzeit auf eine eine innere Abgasrückführung bewirkende Steuerzeit umstellbar sind.

## Claims

1. Method for operating a multi-cylinder internal combustion engine in which the charge exchange is controlled by way of inlet valves and outlet valves and the exhaust gases are discharged from the combustion chambers via at least one exhaust line, and having internal exhaust-gas recirculation effected by way of the set valve timing, wherein the valve timing is set such that exhaust-gas pressure pulses from respectively subsequent cylinders in the ignition sequence effect internal exhaust-gas recirculation into the respectively preceding cylinders, **characterized in that** a manifold (14, 15) of the exhaust system is of two-channel or two-part form, wherein the exhaust gases from the cylinders are supplied to the two channels in temporally alternating fashion, and **in that** a switching valve (20) is provided which connects the two channels to one another and which is opened when defined internal exhaust-gas recirculation is desired at a predefined point in time.

2. Method according to Claim 1, **characterized in that** the valve timing of the outlet valves is set to approximately 30 degrees CA before BDC (start of opening) and approximately 30 degrees CA after TDC (outlet closing).

3. Method according to Claim 1 and 2, **characterized in that** at least the opening time of the inlet valves is advanced to approximately 30 degrees CA before TDC.

4. Method according to one of the preceding claims, **characterized in that** the two channels of the manifolds (14, 15) are connected to a two-channel exhaust-gas turbine (9) of an exhaust-gas turbocharger (8), and **in that**, by closing the switching valve (20) in the relatively low load range, the exhaust-gas turbocharger (8) is operated with pulse supercharging and, by opening the switching valve (20) in the relatively high load range, the exhaust-gas turbocharger is operated with ram supercharging, and **in that**, at least in the lower load range, external exhaust-gas recirculation is additionally performed.

5. Method according to Claim 4, **characterized in that** the switching valve (20) is opened, regardless of the load of the internal combustion engine (7), when the cooling power required for the external exhaust-gas recirculation for cooling the recirculated exhaust gases reaches or exceeds a defined maximum.

6. Device for carrying out the method as claimed in one or more of the preceding claims, having a multi-cylinder internal combustion engine (7) with inlet and outlet valves for each cylinder and having at least one exhaust line for exhaust gases, wherein the valve timing of the outlet valves is retarded, and if appropriate that of the inlet valve is advanced, such that exhaust gas pressure pulses from respectively subsequent cylinders in the ignition sequence effect internal exhaust-gas recirculation into the respectively preceding cylinder, **characterized in that** the exhaust manifold (14, 15) is of two-channel or two-part form with channels that are acted on alternately in the ignition sequence of the internal combustion engine (7), and **in that** a switching valve (20) is provided which is opened when internal exhaust-gas recirculation is desired.

7. Device according to Claim 6, **characterized in that** the two channels of the manifold (14, 15) are connected via separate exhaust lines (16, 17) to a two-channel turbine (9) of an exhaust-gas turbocharger (8), **in that** an external exhaust-gas recirculation arrangement with an exhaust-gas cooler (23), an exhaust-gas recirculation valve (22) and a recirculation line (21) are connected to the manifold (14, 15) upstream of the turbine (9), and **in that** the switching valve (20) is closed in a relatively low load range of the internal combustion engine (7) for the purpose of implementing pulse supercharging and is open in the relatively high load range for the purpose of implementing ram supercharging.

8. Device according to Claim 7, **characterized in that** the switching valve (20) and the exhaust-gas recirculation valve (22) are controlled by means of an electronic control unit (27), wherein the control unit (27) uses, as control criteria, at least the load of the internal combustion engine (7) and the overall exhaust-gas recirculation rate calculated from engine-specific parameters.

9. Device according to one of Claims 6 to 8, **characterized in that** the internal combustion engine (7) is equipped with variable valve control at least of the outlet valves, and **in that**, by means of the valve control, the valve timing can, when the switching valve (20) is open, be switched from timing that yields an optimum charge exchange to timing that effects internal exhaust-gas recirculation.

## Revendications

1. Procédé de fonctionnement d'un moteur à combustion interne multi-cylindrique, dans lequel le changement de charge est commandé par le biais de soupapes d'admission et de soupapes d'échappement et les gaz d'échappement sont évacués des chambres de combustion par le biais d'au moins une conduite de gaz d'échappement, et présentant une recirculation interne des gaz d'échappement provoquée par les temps de commande de soupapes ajustés, les temps de commande de soupapes étant ajustés de telle sorte que des ondes de pression de gaz d'échappement de cylindres suivants respectifs dans la séquence d'allumage provoquent une recirculation interne des gaz d'échappement dans le cylindre précédent respectif, **caractérisé en ce qu'**un collecteur (14, 15) du système d'échappement est à deux tubulures ou en deux parties, les gaz d'échappement des cylindres étant acheminés de manière alternée dans le temps aux deux tubulures, et **en ce qu'**une soupape de commutation (20) connectant les deux tubulures est prévue, laquelle est ouverte lorsqu'une recirculation interne définie des gaz d'échappement est souhaitée à un instant prédéfini.

2. Procédé selon la revendication 1, **caractérisé en ce que** les temps de commande de soupapes des soupapes d'échappement sont ajustés à approximativement 30 degrés d'angle de vilebrequin avant le PMH (début de l'ouverture) et à approximativement 30 degrés d'angle de vilebrequin après le PMH (fin de l'échappement).

3. Procédé selon les revendications 1 et 2, **caractérisé en ce qu'**au moins l'instant d'ouverture des soupapes d'admission est avancé à approximativement 30 degrés d'angle de vilebrequin avant le PMH.

4. Procédé selon l'une quelconque des revendications précédentes, **caractérisé en ce que** les deux tubulures des collecteurs (14, 15) sont reliées à une turbine à gaz d'échappement à deux tubulures (9) d'un turbocompresseur à gaz d'échappement (8), et **en ce que**, par fermeture de la soupape de commutation (20) dans la plage de charge inférieure, le turbocompresseur à gaz d'échappement (8) fonctionne en mode de suralimentation pulsatoire et, par ouverture de la soupape de commutation (20) dans la plage de charge plus élevée, le turbocompresseur à gaz d'échappement fonctionne en mode de suralimentation à pression constante, et **en ce qu'**au moins dans la plage de charge inférieure, une recirculation externe des gaz d'échappement est en outre effectuée.

5. Procédé selon la revendication 4, **caractérisé en ce que** la soupape de commutation (20) est ouverte indépendamment de la charge du moteur à combustion interne (7) lorsque la puissance de refroidissement nécessaire pour la recirculation externe des gaz d'échappement pour le refroidissement des gaz d'échappement recirculés atteint ou dépasse un maximum défini.

6. Dispositif pour mettre en oeuvre le procédé selon l'une quelconque ou plusieurs des revendications précédentes, comprenant un moteur à combustion interne multi-cylindrique (7) comprenant des soupapes d'admission et d'échappement pour chaque cylindre et au moins une conduite de gaz d'échappement pour les gaz d'échappement, les temps de commande de soupapes des soupapes d'échappement étant ajustés en retard et éventuellement ceux de la soupape d'admission étant ajustés en avance de telle sorte que des ondes de pression de gaz d'échappement de cylindres suivants respectifs dans la séquence d'allumage provoquent une recirculation interne des gaz d'échappement dans le cylindre précédent respectif, **caractérisé en ce que** le collecteur des gaz d'échappement (14, 15) est à deux tubulures ou en deux parties, les tubulures étant sollicitées en alternance dans la séquence d'allumage du moteur à combustion interne (7), et **en ce qu'**une soupape de commutation (20) est prévue, laquelle est ouverte lorsqu'une recirculation interne des gaz d'échappement est souhaitée.

7. Dispositif selon la revendication 6, **caractérisé en ce que** les deux tubulures du collecteur (14, 15) sont raccordées à une turbine à deux tubulures (9) d'un turbocompresseur à gaz d'échappement (8) par le biais de conduites de gaz d'échappement séparées (16, 17), **en ce qu'**en amont de la turbine (9), une recirculation externe des gaz d'échappement comprenant un refroidisseur de gaz d'échappement (23), une soupape de recirculation des gaz d'échappement (22) et une conduite de recirculation (21) est raccordée au collecteur (14, 15), et **en ce que** la soupape de commutation (20) est fermée dans une plage de charge plus faible du moteur à combustion interne (7) pour la commande d'une suralimentation pulsatoire et est ouverte dans la plage de charge plus élevée pour la commande d'une suralimentation à pression constante.

8. Dispositif selon la revendication 7, **caractérisé en ce que** la soupape de commutation (20) et la soupape de recirculation des gaz d'échappement (22) sont commandées par le biais d'un appareil de commande électronique (27), l'appareil de commande (27) utilisant, en tant que critères de commande, au moins la charge du moteur à combustion interne (7) et le taux global de recirculation des gaz d'échappement calculé à partir de paramètres spécifiques au moteur.

9. Dispositif selon l'une quelconque des revendications 6 à 8, **caractérisé en ce que** le moteur à combustion interne (7) est équipé d'une commande variable de soupapes d'au moins les soupapes d'échappement, et **en ce que**, par le biais de la commande de soupapes, les temps de commande de soupapes peuvent, lorsque la soupape de commutation (20) est ouverte, être commutés d'un temps de commande produisant un changement de charge optimal à un temps de commande provoquant une recirculation interne des gaz d'échappement.
